# EUROPÄISCHE PATENTSCHRIFT

(11) **EP 2 366 805 B1**
(45) Veröffentlichungstag und Bekanntmachung des Hinweises auf die Patenterteilung: **14.10.2015**
(21) Anmeldenummer: 10008035.7
(22) Anmeldetag: 02.08.2010
(51) Int. Cl.: B21D 5/00, B21D 22/02, B32B 15/01, C21D 1/673

(54) **Verfahren zur Herstellung von pressgehärteten Formbauteilen**
Method for manufacturing press hardened components
Procédé de fabrication de composants de formage durcis par une presse

(30) Priorität: 12.03.2010 DE 102010011368
(43) Veröffentlichungstag der Anmeldung: 21.09.2011
(73) Patentinhaber: Benteler Automobiltechnik GmbH, 33104 Paderborn (DE)
(72) Erfinder: Bohner, Friedrich, 33813 Oerlinghausen (DE); Buschsieweke, Otto, 33102 Paderborn (DE); Kaupmann, Paul, 59609 Anroechte (DE); Huschen, Ulrich, 33165 Lichtenau (DE)
(74) Vertreter: Ksoll, Peter

(56) Entgegenhaltungen:
- EP-A1- 2 175 041
- WO-A1-2010/112140
- FR-A1- 2 889 466
- US-B1- 6 463 779

## Beschreibung

Die Erfindung betrifft ein Verfahren zur Herstellung von pressgehärteten Formbauteilen, insbesondere Karosserie- oder Strukturbauteilen von Kraftfahrzeugen, aus einer Platine aus ungehärteten, warm umformbaren Stahlblech, wobei die Platine in einem Pressenwerkzeug zum Formbauteil warm umgeformt und pressgehärtet wird und wobei partielle Bereiche des Formbauteils nach dem Presshärten wärmebehandelt werden.

Zur Reduzierung des Gesamtgewichts und zur Senkung des Kraftstoffverbrauchs von Kraftfahrzeugen wurde in den letzten Jahren die Entwicklung des so genannten New Steel Body vorangetrieben. Bei diesem Leichtbaukonzept finden hochfeste Stähle Anwendung, die im Vergleich zu konventionellen Stählen eine Verringerung der Karosserieblechstärke und damit eine Verringerung des Fahrzeuggesamtgewichts ermöglichen. Solche Kraftfahrzeugbauteile aus hochfesten Stählen werden in der Regel warm umgeformt und pressgehärtet.

Durch die WO 2010/112140 ist ein Verfahren zur Herstellung eines Karosseriebauteils bekannt, bei welchem das Bauteil mehrere Fertigungsstufen durchläuft. Dabei wird das Bauteil nach dem Warmumformen zur Verbesserung seines Formänderungsvermögens und/oder zur Verringerung seiner Festigkeit zumindest partiell erneut erwärmt.

Durch die DE 24 52 486 A1 gehört ein Verfahren zur Herstellung eines gehärteten Blechprofils aus einer Platine in einem Presshärtverfahren zum Stand der Technik. Hierbei wird eine aus einem härtbaren Stahl bestehende Platine auf Härtetemperatur erhitzt und dann in einem Pressenwerkzeug warm umgeformt und anschließend gehärtet, während das Blechprofil im Pressenwerkzeug verbleibt. Da das Blechprofil bei der im Zuge des Härtungsvorganges vorgenommenen Kühlung im Pressenwerkzeug eingespannt ist, erhält man ein Produkt mit guter Maßhaltigkeit.

Das Warmumformen und Härten ist aufgrund der Kombination von Umform- und Vergütungsvorgang in einem Werkzeug eine ratonale Arbeitsweise. Im Rahmen der WO 99/07492 ist vorgesehen, das vorbeschriebene Presshärtverfahren zu modifizieren und im Pressenwerkzeug die randseitigen Bereiche von vorgefertigten Löchern abzubiegen, so dass Kragen entstehen. Dies geschieht im Pressenwerkzeug vor dem Härten. Die Öffnungen im Blechprofil sollen als Durchführöffnungen für Befestigungsschrauben und ähnlichem dienen.

Aus der DE 197 43 802 C2 ist ein Verfahren zur Herstellung eines metallischen Formbauteils für Kraftfahrzeugkomponente bekannt, welches Bereiche mit einer höheren Duktilität aufweist. Bei diesem Verfahren wird eine Stahlblechplatine zunächst auf eine Temperatur zwischen 900°C und 950°C homogen erwärmt, bevor sie in einem Pressenwerkzeug zum Formbauteil umgeformt und gehärtet wird. Anschließend werden partielle Bereiche des gehärteten Formbauteils in einer Zeit von weniger als 30 Sekunden auf eine Temperatur zwischen 600°C und 900°C gebracht, um die Duktilität in diesen Bereichen zu erhöhen bzw. die Festigkeit zu reduzieren. Bei dem bekannten Verfahren kann die partielle Wärmebehandlung auch an einem gehärteten Formbauteil durchgeführt werden, wozu das Formbauteil auf eine Fördereinrichtung fixiert wird. Im Rahmen der DE 197 43 802 C2 erfolgt die partielle Wärmebehandlung vorteilhaft durch induktive Erwärmung.

Für die Wärmebehandlung von schmalen, insbesondere linienförmigen Bauteilflächen ist das bekannte Verfahren nicht optimal. Weiterhin kann die partielle Wärmebehandlung mit Temperaturen bis zu 900°C zu starken Bauteilverzügen sowie einer Wiederaufhärtung des Formteils im wärmebehandelten Bereich führen, da das Stahlgefüge je nach Zusammensetzung ab einer Temperatur von 723°C nicht nur angelassen, sondern zumindest teilweise auch austenitisiert wird. Auch ist eine verzugsfreie Fixierung der Bauteile auf der verfahrensgemäß vorgesehenen Fördereinrichtung schwierig.

Die beim Warmformen und Presshärten eingesetzten Werkstoffe bzw. die daraus hergestellten Formbauteile erreichen bei der Umformung sehr hohe Festigkeiten von 700 MPa und mehr. Bei derartigen Festigkeiten steigt zwangsläufig die Gefahr einer verzögerten Rissbildung und die Möglichkeit des unvorhersehbaren Versagens der Bauteile in Folge der Anwesenheit von Wasserstoff. Der Wasserstoff kann bei der Herstellung (metallurgischer Wasserstoff) oder in Folge einer Oberflächenbehandlung oder bei der Korrosion des Werkstoffs aufgenommen werden.

Verzögerte Rissbildung kann auch nach einer plastischen Verformung auftreten, bei der eine Aktivierung der Oberfläche erfolgt. So neigen (hart-) beschnittene Kanten von hoch- und höchstfesten Bauteilen, die einem korrosiven Umgebungsmedium mit atomar vorliegendem Wasserstoff ausgesetzt sind, im Bereich der Schnittkanten unter dem Einfluss von Eigenspannungen zur Versprödung und damit zur verzögerten Rissbildung. Bei warmgeformten, pressgehärteten Kraftfahrzeugstrukturbaubeilen, wie zum Beispiel B-Säulen, kann eine derartige Wasserstoffversprödung der beschnittenen Bauteilkanten im Crashfall zu einer verminderten Energieaufnahme führen.

Der Erfindung liegt daher, ausgehend vom Stand der Technik, die Aufgabe zugrunde, das gattungsgemäße Verfahren im Hinblick auf eine rationelle Herstellung von gehärteten Formbauteil mit komplexeren Geometrien und die hierbei durchzuführenden, dem Presshärtvorgang nachgeschalteten Bearbeitungsvorgänge zu verbessern.

Die Lösung dieser Aufgabe besteht nach der Erfindung in einem Verfahren gemäß Patentanspruch 1.

Vorteilhafte Ausgestaltungen und Weiterbildungen des erfindungsgemäßen Verfahrens sind Gegenstand der abhängigen Ansprüche 2 bis 10.

Erfindungsgemäß werden die mechanischen Eigenschaften eines pressgehärteten Formbauteils in einem schmalen linienförmigen Bereich durch eine partielle Wärmebehandlung optimiert, um nachfolgende Biege- oder Schneidoperationen einfacher und kostengünstiger zu gestalten. Dazu wird das komplett durchgehärtete Formbauteil entlang eines linienförmigen Bereichs entsprechend einer späteren Biegelinie bzw. einer Beschnittlinie im Anschluss an den Warmformprozess wärmebehandelt. Hierbei werden die linienförmigen Bereiche des Formbauteils bei der partiellen Wärmebehandlung in einer Zeit t_{W} von kleiner oder gleich (≤) 30 Sekunden auf eine Temperatur T_{W} zwischen 100°C und 700°C gebracht. Hierdurch wird die Festigkeit im linienförmigen Bereich reduziert und die Duktilität erhöht. Die Duktilität wird dabei in dem partiell wärmebehandelten linienförmigen Bereich um mindestens 5 % erhöht gegenüber der Duktilität in den nicht partiell wärmenachbehandelten Bereichen des Formbauteils. An dem warmgeformten und pressgehärteten Formbauteil wird nachfolgend entlang des linienförmigen Bereichs verfahrens- und bauteiloptimiert eine Biege- oder Schneidoperation durchgeführt. Die Bearbeitungsvorgänge sind rationaler, kostengünstiger und mit weniger Verschleiß an den Bearbeitungsmaschinen durchzuführen.

Weiterhin kann durch die erfindungsgemäße Herstellungsweise einer verzögerten Rissbildung an den Formbauteilen entgegengewirkt werden.

Kritische Parameter, die verzögerte Rissbildung fördern, sind unter anderem eine lokale Anhäufung der Wasserstoffatome und das Auftreten von Rest- oder inneren Spannungen. Erfindungsgemäß ist daher vorgesehen, die Festigkeit der Bauteilkanten, insbesondere der Bauteilbeschnittkanten, zu reduzieren und die Duktilität zu erhöhen. Durch eine gezielte, vorzugsweise induktive Wärmebehandlung entlang der Beschnittlinie im Anschluss an den Warmformprozess werden die mechanischen Eigenschaften des komplett durchgehärteten Warmformteils entlang der Schnittkanten und/oder in den an die Schnittkanten angrenzenden Bauteilbereich lokal optimiert, so dass die Neigung zur Versprödungsrissbildung minimiert bzw. ausgeschlossen wird.

Nach dem Warmformen und Presshärten weist das Formbauteil eine Zugfestigkeit von mindestens 700 MPA, vorzugsweise 1.000 MPA bis 1.500 MPa auf. Erfindungsgemäß werden die mechanischen Eigenschaften des pressgehärteten Formbauteils in einem schmalen linienförmigen Bereich durch eine partielle Wärmebehandlung optimiert, um nachfolgende Biege- oder Schneidoperationen einfacher und kostengünstiger zu gestalten. Dazu wird das komplett durchgehärtete Formbauteil entlang eines linienförmigen Bereichs entsprechend einer späteren Biegelinie bzw. einer Beschnittlinie im Anschluss an den Warmformprozess wärmebehandelt. Hierdurch wird die Festigkeit im linienförmigen Bereich reduziert und die Duktilität erhöht. Dies erfolgt zum Zwecke der Vermeidung einer wasserstoffinduzierten Rissbildung.

Das warmgeformte und pressgehärtete Formbauteil wird bei der partiellen Wärmebehandlung in eine Haltevorrichtung fixiert eingespannt gehalten. Die partielle Wärmebehandlung erfolgt innerhalb der Haltevorrichtung gemäß einem bauteilspezifischen Temperatur-Zeit-Verlauf. Hierbei werden die linienförmigen Bereiche des Formbauteils bei der partiellen Wärmebehandlung in einer Zeit t_{W} von kleiner oder gleich (≤) 30 Sekunden auf eine Temperatur T_{W} zwischen 100°C und 700°C gebracht. Hierdurch wird die Duktilität lokal im linienförmigen Bereich erhöht und die Festigkeit reduziert.

Besonders vorteilhaft erfolgt die partielle Wärmebehandlung induktiv. Möglich und rationell ist auch der Einsatz von Infrarotstrahlern für die partielle Wärmebehandlung.

Eine induktive Erwärmung ermöglicht die Behandlung von sehr schmalen linienförmigen Bauteilbereichen. Hierbei wird eine sehr kleine und schmale Übergangszone zwischen den Bauteilbereichen mit hoher Festigkeit und Härte und den Bauteilbereichen mit geringer Festigkeit bzw. Härte erzeugt.

Vorteilhaft ist weiterhin, dass sich nach der Wärmebehandlung keine bzw. nur sehr geringe Bauteilverzüge ergeben, die zuverlässig innerhalb der zulässigen Maßtoleranzen liegen. In diesem Zusammenhang ist es auch wichtig, dass das Formbauteil erfindungsgemäß in der Haltevorrichtung solange eingespannt gehalten wird, bis die Bauteiltemperatur T_{B} auf ein für den Bauteilverzug unkritischen Wert abgesunken ist. Die Haltevorrichtung mit integrierter Heizeinrichtung, insbesondere integriertem Induktor, ist mithin ein wesentlicher Aspekt der Erfindung.

Weiterhin ist es erfindungsgemäß möglich, dass das Formbauteil in der Haltevorrichtung zumindest bereichsweise unter elastischer Spannung gehalten wird, während es der partiellen Wärmebehandlung unterzogen wird. Hierdurch kann eine zusätzliche Formgebung der Sollgeometrie erfolgen. Auf diese Weise kann durch die Überlagerung der erzwungenen Biege- bzw. Zug- und Druckkräften und der Wärmespannungen gezielt Einfluss auf die Bauteileigenschaften im Bereich der Wärmebehandlung genommen werden.

Eine weitere vorteilhafte Ausgestaltung des erfindungsgemäßen Verfahrens besteht darin, die Fixierung des Formbauteils in der Haltevorrichtung unter Berücksichtigung der in Folge der Wärmebehandlung auftretenden Geometrieveränderungen des Formbauteils durchzuführen, so dass das Formbauteil nach der Wärmebehandlung und/oder nach der Entnahme aus der Haltevorrichtung seine Sollgeometrie einnimmt. Die Kontur der Haltevorrichtung muss demnach nicht zwingend der Soll- bzw. Endgeometrie des Formbauteils entsprechen. Erfindungsgemäß werden geometrische Veränderungen des Formbauteils in Folge der partiellen Wärmebehandlung berücksichtigt und gezielt bei der Gestaltung des Formbauteils und der Erzeugung der im Werkstoffgefüge veränderten, linienförmigen Bereiche ausgenutzt.

Wie bereits erwähnt, wird das gehärtete Formbauteil in der Haltevorrichtung in einer Zeit von weniger als 30 Sekunden partiell auf eine Temperatur zwischen 100°C und 700°C gebracht. In der Praxis angestrebt ist, dass die partielle Erwärmung in einer Zeit von unter 10 Sekunden, vorzugsweise 2 Sekunden erfolgt. Für die Praxis bedeutsam ist auch die erfindungsgemäß reduzierte Temperatur der Wärmebehandlung unterhalb von 700°C. Hierdurch kann eine Wiederaufhärtung des wärmebehandelten Bauteilbereichs vermieden werden.

Erfindungsgemäß ist weiterhin vorgesehen, dass das Formbauteil mit einer Oberflächenbeschichtung versehen wird. Die Oberflächenbeschichtung kann auf das Formbauteil vor oder nach der partiellen Wärmebehandlung aufgebracht sein.

Im Rahmen der Erfindung ist es auch möglich, dass eine vorbeschichtete Platine als Ausgangsmaterial für die Herstellung der pressgehärteten Formbauteile zum Einsatz gelangt. Hier bietet sich insbesondere der Einsatz einer feueraluminierten Platine an. Auch eine Vorbeschichtung mit einer Aluminium-Silicium-Legierung oder einer Zink- bzw. Aluminium-Zink-Legierung ist möglich. Die Applikation eines Korrosionsschutzes erfolgt mithin bereits vor dem Warmumformen und Presshärten auf der als Ausgangsmaterial eingesetzten Stahlplatine. Erfindungsgemäß kommt hier ein Korrosionsschutz auf Basis einer Leichtmetalllegierung zur Anwendung.

Die Erfindung ist nachfolgend anhand von Zeichnungen beschrieben. Es zeigen:
- Figur 1: in perspektivischer Darstellungsweise einen Induktor für eine induktive Bauteilerwärmung;
- Figur 2: ebenfalls in perspektivischer Darstellungsweise eine Haltevorrichtung mit integriertem Induktor;
- Figur 3: den Ausschnitt A der Figur 2 in vergrößerter Darstellungsweise;

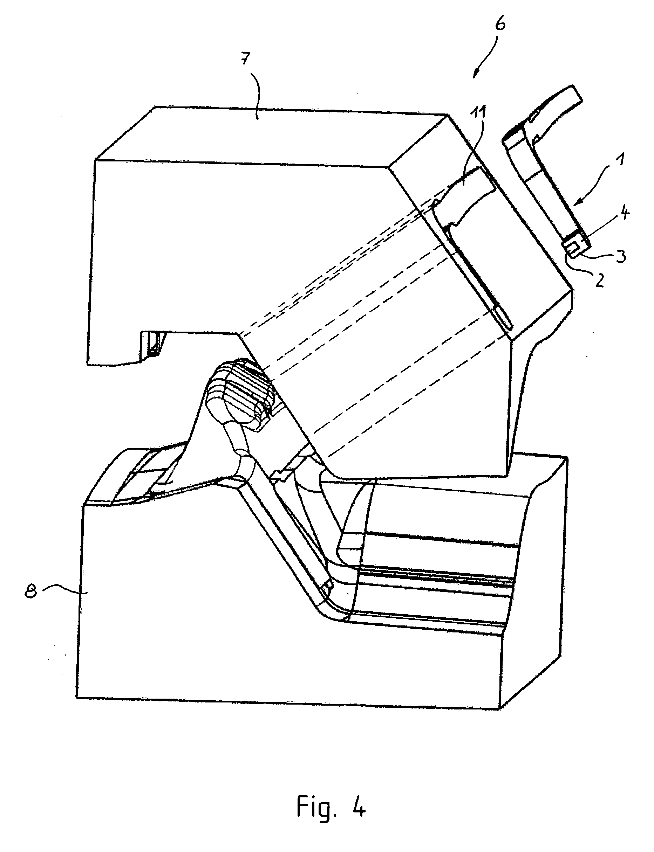

- Figur 4: eine weitere Ansicht auf einen Ausschnitt der Haltevorrichtung mit der Darstellung der Anordnung des Induktors und
- Figur 5a: in schematisierter Darstellungsweise einen Ausschnitt aus einem Formbauteil sowie
- Figur 5b: den rechten Seitenschenkel des Formbauteils gemäß der Figur 5a mit umgebogener Längskante;
- Figur 5c: den rechten Seitenschenkel des Formbauteils gemäß der Figur 5a mit beschnittener Längskante.

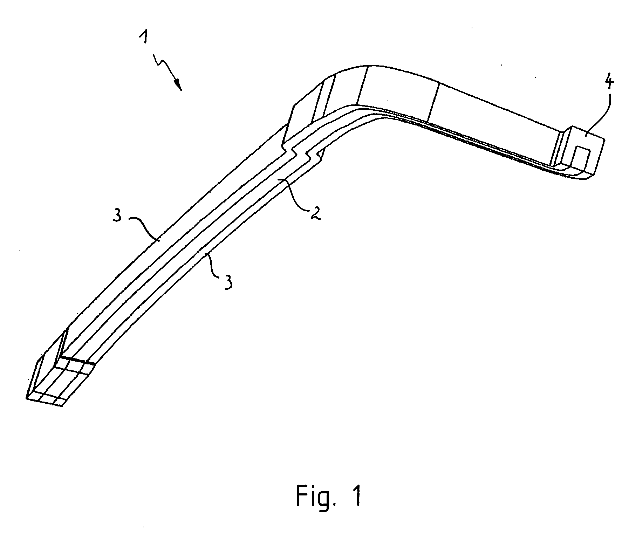

Für die partielle Wärmebehandlung im Rahmen des erfindungsgemäßen Verfahrens zur Herstellung von pressgehärteten Formbauteilen kommt ein Induktor 1 zur Anwendung, wie er in der Figur 1 dargestellt ist.

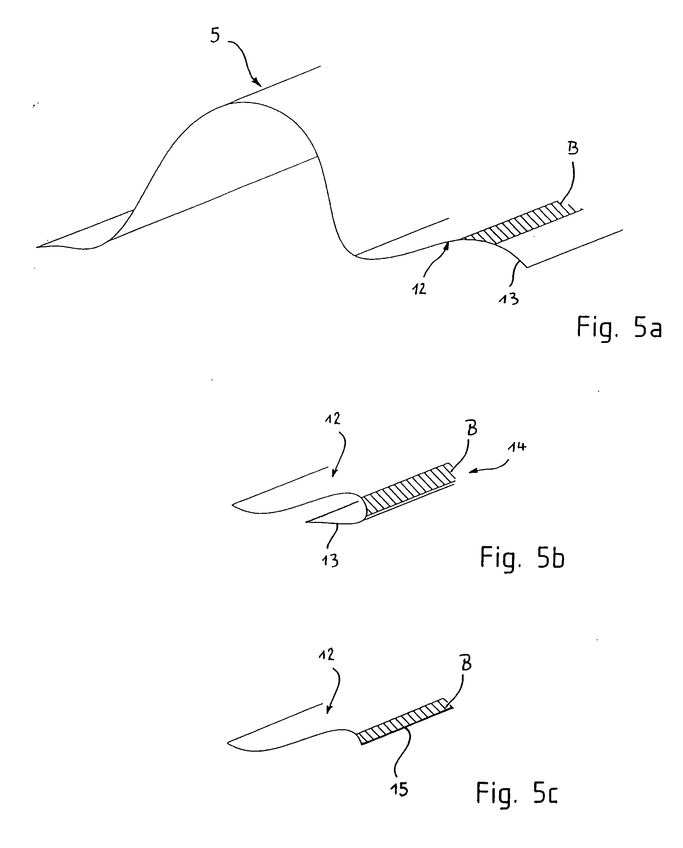

Der Induktor 1 umfasst ein schmales Vierkant-Kupferrohr 2, das an den drei von der zu behandelnden Bauteiloberfläche abgewandten Seiten mit Konzentratorblechen 3, 4 umgeben ist. In der praktischen Ausführungsform hat das Vierkant-Kupferrohr 2 beispielsweise eine Breite von 4 Millimeter und eine Höhe von 8 Millimeter. Die Konzentratorbleche 3, 4 erstrecken sich über die gesamte Länge des Vierkant-Kupferrohr 2 und besitzen eine Dicke von 4 Millimeter. Man erkennt, dass der Induktor 1 im Vergleich zu seiner Breite eine mehrfach größere Längserstreckung besitzt und im Verlauf seiner Längserstreckung mehrfache Krümmungen aufweist. Der geometrische Kontur- und Krümmungsverlauf ist abgestimmt auf die erfindungsgemäß durchzuführende partielle Wärmebehandlung an einem warm umgeformten und pressgehärteten Formbauteil 5 entlang eines linienförmigen Bereichs B (siehe Figur 5a und Figur 5b). Der linienförmige Bereich entspricht dem Verlauf einer späteren Biegelinie oder Beschnittlinie am Formbauteil 5.

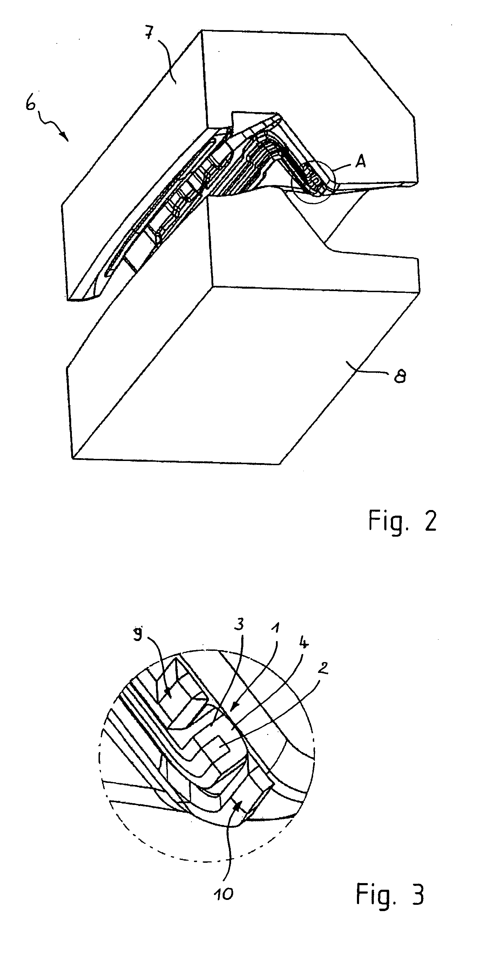

Die Figuren 2 bis 3 zeigen den Induktor 1 eingegliedert in eine Haltevorrichtung 6. Die Haltevorrichtung 6 umfasst als wesentliche Komponente ein Oberwerkzeug 7 und ein Unterwerkzeug 8. Oberwerkzeug 7 und Unterwerkzeug 8 bestehen aus einem Leichtmetall, vorzugsweise aus Aluminium oder einer Aluminiumlegierung. Aluminium bzw. Aluminiumlegierungen haben den Vorteil, dass der Werkstoff gut wärmeleitend ist.

Zur Herstellung eines komplex geformten pressgehärteten Formbauteils 5, wie einem Karosserie- oder Strukturbauteil von Kraftfahrzeugen, wird eine Platine aus ungehärtetem warm umformbaren Stahlblech eingesetzt. Die Platine wird auf eine Temperatur oberhalb der Austenitisierungtemperatur erwärmt und in einem Pressenwerkzeug zum Formbauteil 5 warm umgeformt und im Pressenwerkzeug eingespannt pressgehärtet. Das Formbauteil 5 weist dann eine Zugfestigkeit von mindestens 700 MPa auf, insbesondere liegt die Zugfestigkeit in einem Bereich zwischen 1.000 MPa und 1.500 MPa. Anschließend wird das so hergestellte pressgehärtete Formbauteil 5 aus dem Pressenwerkzeug entnommen und partielle Bereiche B des Formbauteils 5 einer gezielten lokal eng begrenzten linienförmigen Wärmebehandlung unterzogen. In der Haltevorrichtung 6 wird das warm umgeformte und pressgehärtete Formbauteil 5 entweder vollständig formschlüssig oder über linienförmige Auflageflächen 9, 10, wie in der Figur 3 zu erkennen, aufgenommen und eingespannt. Die Auflageflächen erstrecken sich entlang der Bauteilkontur auf beiden Seiten korrespondierend zum Verlauf des linienförmigen Bereichs B bzw. des Induktors 1, also der Biege- bzw. Beschnittlinie. Im hier dargestellten Ausführungsbeispiel ist der Induktor 1 in einem Langloch 11 in der Haltevorrichtung 6 integriert. Vorzugsweise erfolgt die Eingliederung des Induktors 1 ins Unterwerkzeug 8. Innerhalb der Haltevorrichtung 6 ist der Induktor mit seinem Vierkant-Kupferrohr 2 und den umgebenden Konzentratorblechen 3, 4 so angeordnet, dass er über seine gesamte Länge einen genauen gleichbleibenden Abstand zur Oberfläche des Formbauteils 5 besitzt. Vorzugsweise beträgt der Abstand 2 Millimeter.

In der Haltevorrichtung 6 aufgenommen und eingespannt wird das Formbauteil 5 einer partiellen Wärmebehandlung entlang des linienförmigen Bereichs B unterzogen. Die partielle Wärmebehandlung erfolgt induktiv mittels des Induktors 1. Hierbei wird das gehärtete Formbauteil 5 in einer Zeit von weniger als 30 Sekunden, vorzugsweise 2 Sekunden partiell in den linienförmigen Bereich B auf eine Temperatur zwischen 100°C und 700°C gebracht. Durch diese partielle Wärmebehandlung wird die Duktilität im linienförmigen Bereich lokal erhöht und die Festigkeit reduziert. Die Haltevorrichtung 6 hält das induktiv erwärmte Formbauteil 5 so lange in Form, in der Regel maximal 30 Sekunden, bis die Temperatur T_{B} auf eine für den Bauteilverzug unkritischen Wert abgesunken ist.

Die partielle Erwärmung und die damit einhergehende erzielte Werkstoffveränderung kann sehr präzise und gezielt in sehr kleinen bzw. wenig breiten, aber relativ langen schmalen linienförmigen Bauteilbereichen mit eng abgegrenzten Übergängen durchgeführt werden. Durch die gezielte partielle Nachwärmebehandlung können die Nachteile einer Wasserstoffversprödung, insbesondere einer wasserstoffinduzierten Rissbildung vermieden werden. Die lokale Anhäufung von Wasserstoffatomen und das Auftreten von Rest- oder inneren Spannungen wird durch die Wärmenachbehandlung auf ein unschädliches Maß reduziert.

In den Figuren 5a und 5b sowie 5c ist schematisch ein warmgeformtes und pressgehärtetes Formbauteil 5 dargestellt. Figur 5a zeigt das dreidimensional geformte Formbauteil 5 nach der erfindungsgemäß durchgeführten partiellen Wärmebehandlung, bei der ein linienförmiger Bereich B in seiner Werkstoffeigenschaft verändert ist. Hierbei ist in dem Bereich B durch die gezielte Wärmebeeinflussung mit einer Temperatur zwischen 100°C und 700°C in einer Zeit t_{W} ≤ 30 Sekunden die Duktilität erhöht und einhergehend damit die Festigkeit reduziert worden.

Nach der partiellen Wärmebehandlung in der Haltevorrichtung 6 wird am Formbauteil 5 entlang des linienförmigen Bereichs B eine Biegeoperation und/oder einer Schneidoperation durchgeführt. In der Figur 5b dargestellt ist der rechte Schenkel 12 des Formbauteils 5 mit seiner umgebogenen Längskante 13. Der duktile festigkeitsreduzierte linienförmige Bereich B erstreckt sich am äußeren freien Ende 14 des umgebogenen Schenkels 12 entlang des Krümmungsbereichs der Längskante über die Länge des Formbauteils 5.

In der Figur 5c dargestellt ist der rechte Schenkel 12 des Formbauteils 5 mit seiner Bauteilbeschnittkante 15. Der duktile festigkeitsreduzierte linienförmige Bereich B erstreckt sich an der äußeren Beschnittkante 15 über die Länge des Formbauteils 5. Die Schneidoperation ist innerhalb des linienförmigen Bereichs B durchgeführt worden. Des Weiteren ist der Schenkel 12 im Bereich B umgebogen worden.

Vorzugsweise ist das Formbauteil 5 mit einer Oberflächenbeschichtung versehen, wobei grundsätzlich eine Oberflächenbeschichtung nach der partiellen Wärmebehandlung und den nachfolgenden Biege- bzw. Schneidoperationen durchgeführt werden kann oder auch davor.

Im Rahmen der Erfindung ist es auch möglich, dass eine vorbeschichtete Platine als Ausgangsmaterial für die Herstellung eines pressgehärteten Formbauteils 5 eingesetzt wird. Die erfindungsgemäße partielle Wärmebehandlung von linienförmigen Bereichen erfolgt dann, wie zuvor beschrieben, an dem aus der vorbeschichteten Platine hergestellten pressgehärteten Formbauteil.

Weiterhin ist es möglich, dass das Formbauteil 5 in der Haltevorrichtung 6 während der partiellen Wärmebehandlung zumindest Bereichsweise unter elastischer Spannung gehalten wird. Die Fixierung des Formbauteils 5 in der Haltevorrichtung 6 kann hierbei insbesondere unter Berücksichtigung mit der in Folge der Wärmebehandlung auftretenden Geometrieänderungen des Formbauteils 5 erfolgen, so dass das Formbauteil 5 nach der Wärmebehandlung und/oder nach der Entnahme aus der Haltevorrichtung 6 seine Soll-Geometrie aufweist.

### Bezugszeichen:

- 1 -: Induktor
- 2 -: Vierkant-Kupferrohr
- 3 -: Konzentratorbleche
- 4 -: Konzentratorblech
- 5 -: Formbauteil
- 6 -: Haltevorrichtung
- 7 -: Oberwerkzeug
- 8 -: Unterwerkzeug
- 9 -: Auflagefläche
- 10 -: Auflagefläche
- 11 -: Langloch
- 12 -: Schenkel von 5
- 13 -: Längskante von 12
- 14 -: freies Ende von 12
- 15 -: Bauteilbeschnittkante

- B -: linienförmiger Bereich
- t_{W} -: Zeit der partiellen Wärmebehandlung
- T_{W} -: Temperatur der partiellen Wärmebehandlung
- T_{B} -: abgekühlte Bauteiltemperatur

## Patentansprüche

1. Verfahren zur Herstellung von pressgehärteten Formbauteilen aus einer Platine aus ungehärtetem, warm umformbaren Stahlblech, wobei die Platine in einem Pressenwerkzeug zum Formbauteil (5) warm umgeformt und pressgehärtet wird und wobei partielle Bereiche des Formbauteils (5) nach dem Presshärten wärmebehandelt werden, **dadurch gekennzeichnet, dass** die partielle Wärmebehandlung entlang eines linienförmigen Bereichs (B) am Formbauteil (5) entsprechend einer späteren Biegelinie oder einer Beschnittlinie ausgeführt wird, wobei die linienförmigen Bereiche (B) bei der partiellen Wärmebehandlung in einer Zeit (t_{W}) von kleiner oder gleich 30 sec auf eine Temperatur (T_{W}) zwischen 100°C und 700°C gebracht werden und die Duktilität in dem linienförmigen Bereich (B) gegenüber den angrenzenden Bereichen des Formbauteils (5) um mindestens 5 % erhöht wird und nachfolgend an die Wärmebehandlung am Formbauteil (5) entlang des linienförmigen Bereichs (B) eine Biege- oder Schneidoperation erfolgt.

2. Verfahren nach Anspruch 1, **dadurch gekennzeichnet, dass** das Formbauteil (5) nach dem Presshärten eine Zugfestigkeit von mindestens 700 MPa aufweist.

3. Verfahren nach einem der Ansprüche 1 oder 2, **dadurch gekennzeichnet, dass** die partielle Wärmebehandlung induktiv erfolgt.

4. Verfahren nach einem der Ansprüche 1 bis 3, **dadurch gekennzeichnet, dass** die partielle Wärmebehandlung durch InfrarotStrahler erfolgt.

5. Verfahren nach einem der Ansprüche 1 bis 4, **dadurch gekennzeichnet, dass** das Formbauteil (5) bei der partiellen Wärmebehandlung in einer Haltevorrichtung (6) gehalten wird.

6. Verfahren nach Anspruch 5, **dadurch gekennzeichnet, dass** das Formbauteil (5) in der Haltevorrichtung (6) so lange eingespannt gehalten wird, bis die Bauteiltemperatur (T_{B}) auf einen für den Bauteilverzug unkritischen Wert abgesunken ist.

7. Verfahren nach Anspruch 5 oder 6, **dadurch gekennzeichnet, dass** das Formbauteil (5) in der Haltevorrichtung (6) zumindest bereichsweise unter elastischer Spannung gehalten wird.

8. Verfahren nach einem der Ansprüche 5 bis 7, **dadurch gekennzeichnet, dass** die Fixierung des Formbauteils (5) in der Haltevorrichtung (6) unter Berücksichtigung der in Folge der Wärmebehandlung auftretenden Geometrieänderungen des Formbauteils (5) erfolgt und dass das Formbauteil (5) nach der Wärmebehandlung und/oder nach der Entnahme aus der Haltevorrichtung (6) seine Sollgeometrie aufweist.

9. Verfahren nach einem der Ansprüche 1 bis 8, **dadurch gekennzeichnet, dass** das Formbauteil (5) mit einer Oberflächenbeschichtung versehen wird.

10. Verfahren nach einem der Ansprüche 1 bis 8, **dadurch gekennzeichnet, dass** eine vorbeschichtete Platine als Ausgangsmaterial für die Herstellung des pressgehärteten Formbauteils (5) eingesetzt wird.

## Claims

1. A method of producing press-hardened shaped components from a plate of unhardened steel sheet capable of being hot-formed, wherein the plate is hot-formed and press-hardened in a pressing tool to form the shaped component (5), and wherein partial regions of the shaped component (5) are heat-treated after the press-hardening, **characterized in that** the partial heat-treatment is carried out along a linear region (B) on the shaped component (5) in accordance with a subsequent bending line or a trimming line, wherein during the partial heat-treatment the linear regions (B) are brought to a temperature (T_{W}) of between 100°C and 700°C in a time (t_{W}) of less than or equal to 30 sec and the ductility in the linear region (B) is increased by at least 5% as compared with the adjacent regions of the shaped component (5) and following the heat-treatment a bending or cutting operation is carried out on the shaped component (5) along the linear region (B).

2. A method according to claim 1, **characterized in that** the shaped component (5) has a tensile strength of at least 700 MPa after the press-hardening.

3. A method according to one of claims 1 or 2, **characterized in that** the partial heat-treatment is carried out inductively.

4. A method according to any one of claims 1 to 3, **characterized in that** the partial heat-treatment is carried out by infrared radiators.

5. A method according to any one of claims 1 to 4, **characterized in that** the shaped component (5) is held in a holding apparatus (6) during the partial heat-treatment.

6. A method according to claim 5, **characterized in that** the shaped component (5) is held clamped in the holding apparatus (6) until the temperature (T_{B}) of the component has dropped to a value which is not critical for the warping of the component.

7. A method according to claim 5 or 6, **characterized in that** the shaped component (5) is held in the holding apparatus (6)at least locally under elastic stressing.

8. A method according to any one of claims 5 to 7, **characterized in that** the fixing of the shaped component (5) in the holding apparatus (6) is carried out whilst taking into consideration the changes in the geometry of the shaped component (5) which occur as a result of the heat-treatment, and the shaped component (5) has its target geometry after the heat-treatment and/or after the removal from the holding apparatus (6).

9. A method according to any one of claims 1 to 8, **characterized in that** the shaped component (5) is provided with a surface coating.

10. A method according to any one of claims 1 to 8, **characterized in that** a pre-coated plate is used as the starting material for the production of the press-hardened shaped component (5).

## Revendications

1. Procédé de fabrication de pièces façonnées durcies à la presse à partir d'une platine en tôle d'acier non durcie et déformable à chaud, la platine étant déformée à chaud dans un outil de presse pour donner la pièce façonnée (5) puis durcie à la presse et des zones partielles de la pièce façonnée (5) étant soumises à un traitement thermique après le durcissage à la presse, **caractérisé en ce que** le traitement thermique partiel est réalisé le long d'une zone linéaire (B) sur la pièce façonnée (5) suivant une ligne ultérieure de flexion ou de coupe, les zones linéaires (B) étant amenées à une température (T_{W}) comprise entre 100 °C et 700 °C lors du traitement thermique partiel en un temps (t_{W}) inférieur ou égal à 30 secondes et la ductilité dans la zone linéaire (B) étant augmentée d'au moins 5 % par rapport aux zones adjacentes de la pièce façonnée (5) et une opération de flexion ou de coupe étant effectuée à la suite du traitement thermique sur la pièce façonnée (5) le long de la zone linéaire (B).

2. Procédé selon la revendication 1, **caractérisé en ce que** la pièce façonnée (5) présente, après le durcissage à la presse, une résistance à la traction d'au moins 700 MPa.

3. Procédé selon l'une des revendications 1 ou 2, **caractérisé en ce que** le traitement thermique partiel s'effectue de manière inductive.

4. Procédé selon l'une des revendications 1 à 3, **caractérisé en ce que** le traitement thermique partiel s'effectue par rayonnement infrarouge.

5. Procédé selon l'une des revendications 1 à 4, **caractérisé en ce que** la pièce façonnée (5) est maintenue dans un dispositif de retenue (6) lors du traitement thermique partiel.

6. Procédé selon la revendication 5, **caractérisé en ce que** la pièce façonnée (5) est maintenue serrée dans le dispositif de retenue (6) jusqu'à ce que la température de pièce (T_{B}) diminue au-dessous d'une valeur non critique pour l'élasticité de la pièce.

7. Procédé selon la revendication 5 ou 6, **caractérisé en ce que** la pièce façonnée (5) est maintenue dans le dispositif de retenue (6) au moins par endroits sous une contrainte élastique.

8. Procédé selon l'une des revendications 5 à 7, **caractérisé en ce que** la fixation de la pièce façonnée (5) dans le dispositif de retenue (6) s'effectue en tenant compte des modifications géométriques de la pièce façonnée (5) qui apparaissent à la suite du traitement thermique et **en ce que** la pièce façonnée (5) présente sa géométrie de consigne après le traitement thermique et/ou après l'enlèvement hors du dispositif de retenue (6).

9. Procédé selon l'une des revendications 1 à 8, **caractérisé en ce que** la pièce façonnée (5) est munie d'un revêtement de surface.

10. Procédé selon l'une des revendications 1 à 8, **caractérisé en ce qu'**une platine pré-revêtue est utilisée comme matériau de départ pour la fabrication de la pièce façonnée (5) durcie à la presse.
